# EUROPEAN PATENT SPECIFICATION

(11) **EP 1 740 298 B1**
(45) Date of publication and mention of the grant of the patent: **19.11.2008**
(21) Application number: 05715517.8
(22) Date of filing: 24.02.2005
(51) Int. Cl.: B01J 2/16, B01J 8/44

(54) **FLUID BED GRANULATION PROCESS AND APPARATUS**
WIRBELSCHICHTRANULATIONSVERFAHREN UND -VORRICHTUNG
PROCEDE ET DISPOSITIF DE GRANULATION EN LIT FLUIDISE

(30) Priority: 07.04.2004 EP 04008418
(43) Date of publication of application: 10.01.2007
(73) Proprietor: UREA CASALE S.A., 6900 Lugano-Besso (CH)
(72) Inventor: BEDETTI, Gianfranco, I-20149 Milano (IT)
(74) Representative: Zardi, Marco
(86) International application number: PCT/EP2005/001950
(87) International publication number: WO 2005/097309

(56) References cited:
- WO-A-02/36256
- WO-A-02/100527
- US-A- 4 033 555
- US-B1- 6 338 303
- PATENT ABSTRACTS OF JAPAN vol. 1996, no. 02, 29 February 1996 (1996-02-29) -& JP 07 265683 A (FREUNT IND CO LTD; others: 01), 17 October 1995 (1995-10-17)
- PATENT ABSTRACTS OF JAPAN vol. 010, no. 321 (C-382), 31 October 1986 (1986-10-31) & JP 61 133132 A (OKAWARA MFG CO LTD), 20 June 1986 (1986-06-20) -& DATABASE WPI Section Ch, Week 198631 Derwent Publications Ltd., London, GB; Class J02, AN 1986-200928 XP002350355 & JP 61 133132 A (OKAWARA MFG CO LTD) 20 June 1986 (1986-06-20)

## Description

### Field of application

In its most general aspect, the present invention refers to a fluid bed granulation process of a suitable substance like, for (not limiting) example, urea, ammonium nitrate, ammonium chloride and similar substances susceptible to being granulated.

More specifically, this invention concerns a fluid bed granulation process in which the obtainment of granules of a predetermined substance occurs through continuous growth (of volume and of mass), of granule seeds of such a substance, fed continuously into said fluid bed, at the same time with a flow of an appropriate growth substance in liquid state.

In the rest of the description and in the subsequent claims, with the terms "granule seeds of a predetermined substance", we intend to indicate particles of the substance to be granulated, having a size of up to about 2.5 mm. Moreover, for the sake of simplification, we shall just use the term "seeds" to indicate granule seeds.

The invention also refers to a granulation apparatus that can be used to carry out the aforementioned process.

### Prior art

It is known that in a fluid bed granulation process of a predetermined substance it is necessary to feed seeds of a substance to be granulated into said bed and grow them through the feeding of a suitable growth substance, generally the same substance of the seeds, in liquid state, possibly comprising a solvent. In the rest of the description and in the subsequent claims, the predetermined growth substance in liquid state shall also be called growth liquid.

It is known that to reach a good granulation result (predetermined size, shape and mass of the granule) through a fluid bed process of the aforementioned type, it is necessary to ensure a good "wetting" of the seeds and of the granules by the growth liquid.

For such a purpose, it is necessary for the growth liquid to be fed into the fluid bed, in the form of drops that are as small as possible, certainly smaller than the seeds and the granules that are growing with which they are intended to come into contact.

For example, in the case in which the substance to be granulated is urea, this allows the evaporation of the water present in the growth liquid (urea in solution), so as to obtain a finished product (urea granules) with high purity.

In general, the size of the drops of growth liquid is decisive to allow the evaporation of the solvent possibly present in it.

At worst, it is necessary and good that said growth liquid is fed in so-called "atomized" form. In this condition, indeed, the growth liquid manages to meet all of the seeds and granules of substance suspended in the fluid bed individually, to wet them, covering their entire surface uniformly and optimally.

To atomize the growth liquid, the prior art makes use of special nozzles fed with said liquid and large volumes of air (or another appropriate gas) at high speed, for example between 150 and 300 m/s.

With wetting complete, the seeds and the granules in growth are subjected to an evaporation step of the possible solvent and then a solidification/consolidation step.

A process of this type, for the production of urea, is for example described in US-A-4 353 730.

Although they are advantageous from various points of view, fluid bed granulation processes of the prior art suffer from recognized drawbacks, including the substantial impossibility of controlling the particle size of the finished product within a predetermined range of values and the high operating costs. Indeed, the atomization of said growth fluid is generally obtained with large amounts of high-speed air and this notoriously prevents an adequate, satisfactory control of the growth of the granules inside the fluid bed.

Moreover, as a consequence of the aforementioned drawback, it is necessary to make use of classification and screening operations of the granules produced, to take care of the discarding, always considerable, of the granules of unacceptable size (either too big or too small), and of recovery operations of such discard and its recycling upstream of the granulation process.

Other recognized drawbacks of fluid bed granulation processes of the prior art consist of the non-optimal uniform wetting of the seeds and of the granules of substance in growth, as well as the undesired formation of clots, with the consequent considerable reduction in yield of the entire process. Fluid bed granulation processes are also disclosed in WO-A-02100527, JP-A-07265683 and JP-A-61133132.

### Summary of the invention

The problem underlying the present invention is that of devising and providing a fluid bed granulation process having functional characteristics so as to overcome all the cited drawbacks with reference to the prior art, i.e. which allows a tighter control of the granulation steps, a substantial reduction in the formation of powders and clots and, last but not least, a considerable improved cost-effectiveness of the process.

The aforementioned technical problem is solved, according to the present invention, by a fluid bed granulation process as claimed in the attached claim 1.

The fluidification air flow is divided into a plurality of fractions having respective flow rates between a minimum value flow rate, sufficient to support the fluid bed, fed at a first zone thereof and a maximum value flow rate, fed in another zone of the bed itself, so as to induce and maintain said circulatory movement, substantially vortex-shaped, of the granules of said substance.

Further characteristics and the advantages of the invention will become clearer from the detailed description of an embodiment of a granulation process according to the invention, given hereafter with reference to the attached drawings, supplied only for indicative and non-limiting purposes.

### Brief description of the drawings

Figs. 1 and 2 schematically represent a longitudinal section and a cross section, respectively, of an apparatus (granulator) for carrying out the granulation process of the present invention;
Figs. 3 and 3a, schematically represent respective plan views of variant embodiments of a detail of the granulator of figures 1 and 2;
Fig. 4 schematically represents a plan view of a variant embodiment of the detail of figures 3, 3a;
Figs. 5 and 5a schematically represent a plan view and cross section, respectively, of a further variant embodiment of a detail of a granulation not part of the present invention;
Fig. 5b represents a cross section of a variant embodiment of the detail of figures 5, 5a which is also not part of the present invention;
Fig. 6 represents the same granulator of fig. 2 for carrying out a variant of the granulation process of the present invention;
Fig. 7 schematically represents a further variant embodiment of the detail of figures 3, 3a.

### Detailed description

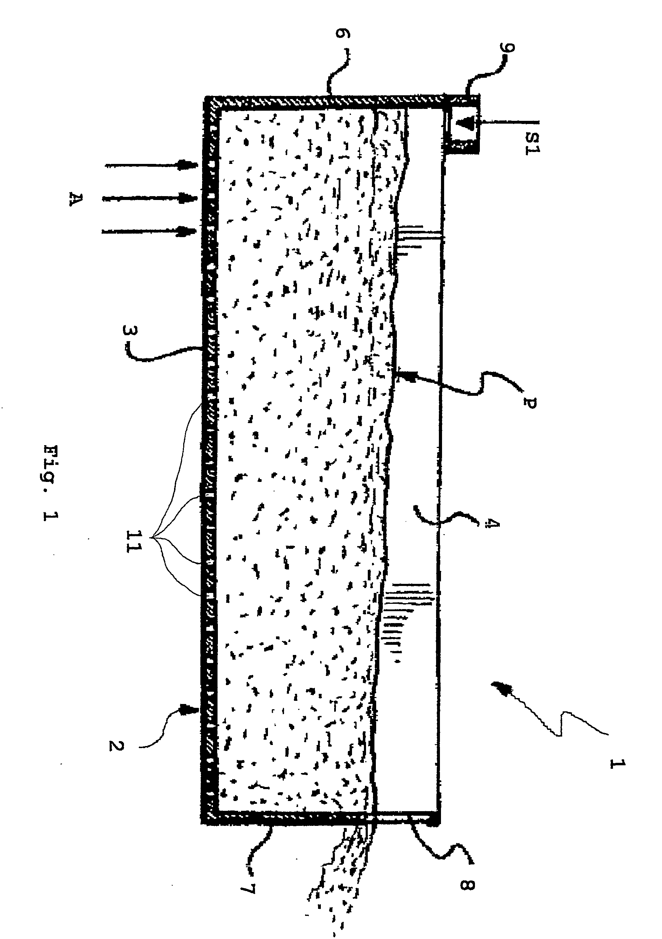

With reference to figures 1, 2, 3, 3a an apparatus for carrying out a fluid bed granulation process according to the present invention is globally indicated with 1, an apparatus that in the rest of the description shall be more simply called granulator.

In an entirely schematic way, said granulator 1 comprises a container 2, represented open at the top, that is substantially parallelepiped in shape, with a rectangular section.

Said container 2 has a bottom 3, permeable to gas, consisting of a perforated element (grid), two opposite long side walls 4, 5 and two opposite short walls, front 6 or head and rear 7.

At the upper side of the head wall 6 a device, schematized as 9, per se conventional and therefore not described in detail, is supported for supplying a continuous flow of seeds S1 of substance to be granulated into the container 2. In the rear wall 7 and at a predetermined height over the bottom or grid 3; an opening 8 is formed, for the discharge, substantially by weir, of the finished (granulated) product from said container 2, as shall become clear in the rest of the description.

In a position below the container 2, a blowing system is provided (not represented since it is totally conventional) of air A or another gaseous fluid (fluidification air), used for carrying out and maintaining a fluid bed of the substance to be granulated inside the container 2.

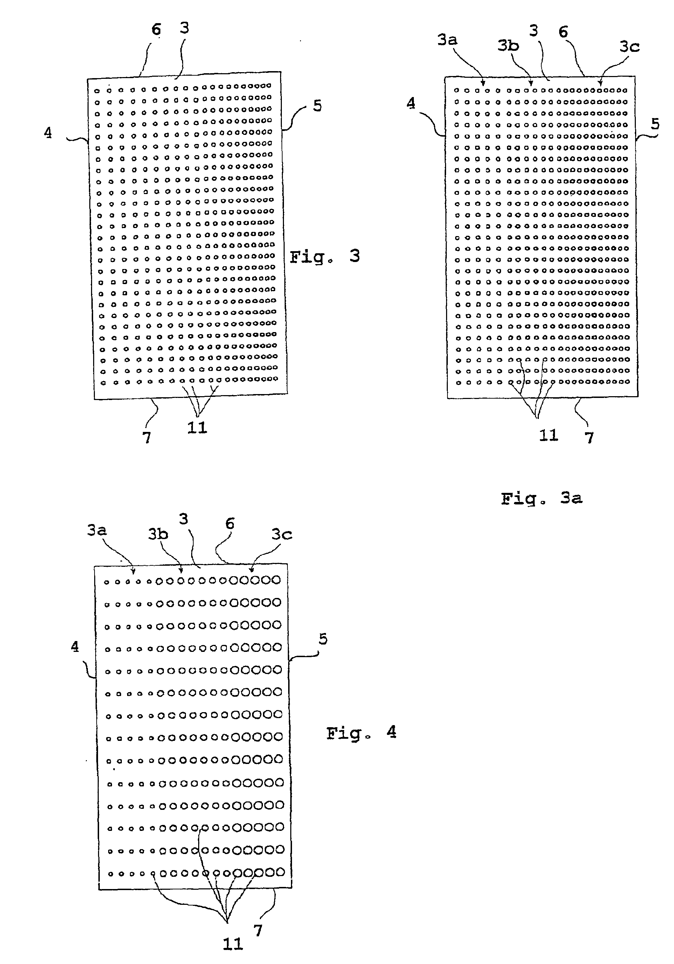

In accordance with a characteristic of the present invention, the grid 3, which, as stated, constitutes the bottom of said container 2, is essentially a perforated plate (figs. 3, 3a), in which the holes 11, provided for the injection into said container 2 of a predetermined flow rate of fluidification air, are distributed in a non-homogeneous manner.

According to a first preferred embodiment of the invention (fig. 3), all the holes 11 have the same diameter and their distribution in the grid 3 is selected so that their "density", understood as the amount of holes per square centimeter of surface, increases starting from a long wall of the container 2, for example from the wall 4, towards the opposite long wall, for example towards the wall 5. In particular (fig. 3a), according to a further embodiment, said "non-homogeneous" distribution is obtained by defining parallel bands 3a, 3b, 3c, of predetermined width, in the grid 3, in each of which the respective holes 11 are regularly distributed according to a predetermined "pitch" that is different from band to band.

Near to the upper side of the long side wall of said container 2 (in the example the wall 5), adjacent to the zone 3c of the grid 3 of figure 3a, where there is the greatest density of holes 11, a distributor-supplier 10 is supported with conventional means that are not represented, for feeding continuously into said container 2 a flow L of a predetermined growth substance for granules, for example in the atomized liquid state.

Said distributor 10 substantially extends for the whole length of the wall 5 and at a height over the bottom (grid) 3 which is predetermined according to the thickness of the fluid bed that, as shall become clear in the rest of the description, one intends to carry out in said container 2. Moreover, said distributor 10 is positioned so as to supply a continuous flow of growth substance orientated, in the example described here, substantially parallely to said grid 3.

With reference to the granulator 1, schematically described above (figures 1 to 3a), an exemplifying embodiment of the granulation process of the present invention shall now be illustrated.

In an initial condition, a fluid bed of seeds S1 of the predetermined substance to be granulated is carried out in the container 2, with a totally conventional technique, said seeds being fed continuously at the head wall 6 of the container itself, through the distributor 9. Such a fluid bed is obtained, supported and maintained through a suitable continuous air flow A (fluidification air), of predetermined flow rate, fed from below and continuously into the container 2, through the grid 3 thereof. When the thickness of the fluid bed, continuously fed with seeds S1, is such that its free surface reaches the level of the opening 8, a continuous "discharge", substantially by weir, of the finished granules out from the container 2 begins.

The fluidification air A, crossing the bottom 3, is distributed inside the bed in a "non-homogeneous" manner, corresponding to the "non-homogeneous" distribution of the holes 11, provided on said bottom (grid) 3. Where the density of the holes 11 is greater, there is a greater passage of air; in the exemplified case (figure 3a), a greater flow rate of fluidification air A is obtained in the band 3c of said grid 3, near to the wall 5, and a lower flow rate of fluidification air A is obtained in the band 3a near to the opposite wall 4.

Now, the flow rate of fluidification air, its speed, the diameter of the holes 11 and their "density" in the different bands or zones of the grid 3 are selected so that the formation and support of the fluid bed is ensured at the band(s) or zone(s) of lower density. Consequently, due to the structure of the grid of the present invention, at the other bands of said grid and, in the exemplified case, as one approaches the wall 5 of said container 2, the increasing values of flow rate and speed of the fluidification air determine a dragging upwards, towards the free surface of the fluid bed, of the granules in growth. The degree of such dragging also increases as one approaches said wall 5, at which it reaches its maximum value.

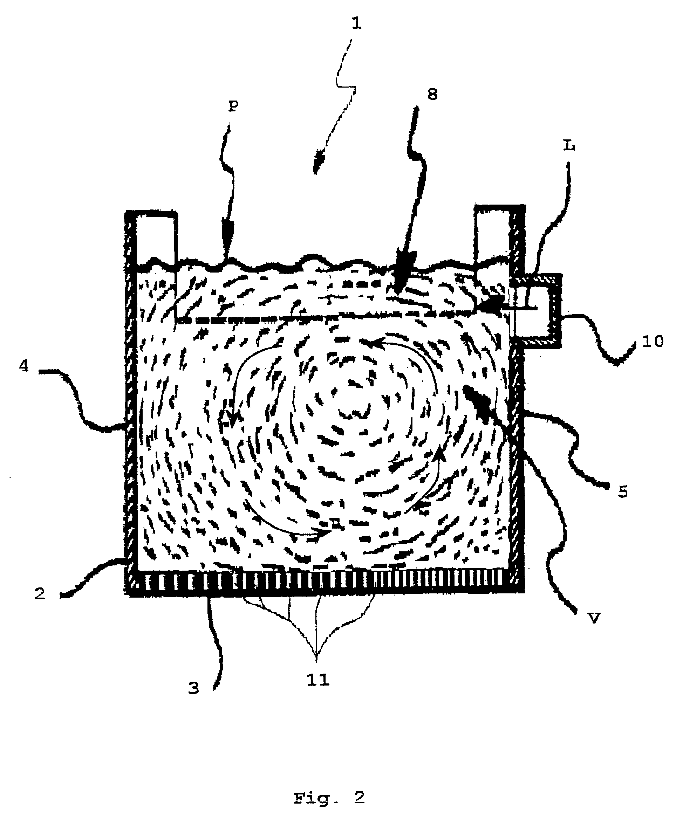

As a first effect, this increase in the degree of dragging upwards, applied on the granules of the fluid bed, determines the formation, in the fluid bed, of a circulatory movement, substantially vortex-shaped V, of the granules around an ideal axis which, in the example of figures 1 and 2, is substantially horizontal, said circulatory movement extending helically from the front wall 6 to the rear wall 7 of said container 2.

Basically, with the use of a container 2 having its bottom or grid 3 structured in the way described above, the granulation process of the present invention essentially consists of distributing the flow rate of fluidification air in the fluid bed, carried out in said container 2, dividing it into a plurality of flow rate fractions, having respective values between a minimum amount, sufficient to support said fluid bed and fed at a first zone 3a thereof, and a maximum amount, fed in a zone 3c of said bed, spaced out from said first zone 3a, so as to induce and maintain a circulatory movement of granules, substantially vortex-shaped, in the fluid bed itself. It should be noted that in the exemplified case, the variation in fluidification air flow rates between said first zone where the flow rate is minimum and the zone spaced out from it where the flow rate is maximum, is of the steps type. In the case of figure 3, instead, the fluidification air flow rates vary, between the zone near to the side wall 4 where the flow rate is minimum and the zone near to the side wall 5 where the flow rate is maximum, in a gradual and continuous manner.

As a second effect, the aforementioned dragging upwards determines, within said circulatory movement and, more specifically, in the ascending tract thereof, a thinning of the granules, a mutual spacing out thereof, which is more evident, indeed, near to the wall 5 of the container 2, in other words at the zone of said grid 3 where the "density" of the holes 11 is greater, in other words where the fluidification air flow rate injected into the fluid is greater.

At the greater thinning of the granules and where the temperature of the fluidification air is greater, the wetting of said granules by the growth liquid, fed in atomized form, takes place. Precisely because they are thinned, in other words well spaced out from each other, the wetting of the granules takes place in a very uniform and optimal manner. Consequently, the uniformity of growth of the granules themselves is improved. Moreover, where the aforementioned wetting of the individual granules takes place, the air of the flow responsible for the rotary stream of granules that has formed in the fluid bed is hot and uniformly and optimally takes care of the evaporation of the possible solvent used in the growth liquid. Consequently, the thickness of the "new" layer of growth substance deposited on every single granule is uniform and optimal.

After wetting, the individual granules move towards the opposite wall 4 of the container 2, together with the granules that immediately follow them in the aforementioned circulatory movement, thus running through successive zones of the fluid bed in correspondence of which the grid 3 has bands 3b, 3a, with gradually reducing density of holes 11. In these zones of the fluid bed the upward thrust applied by the fluidification air, which is maximum near to the wall 5 of said container 2, decreases down to zero. For such a reason, near to said wall 4, the stream of the granules naturally deviates towards the bottom or grid 3 of the container 2.

In the course towards the bottom 3, the individual granules of said circulatory movement cross underlying layers of the fluid bed, which are gradually cooler. During this course the solidification/consolidation step of the growth liquid is carried out on the surface of every single granule, a step that is completed during the subsequent tract extending up to the wall 5 with the obtainment of respective granules having slightly increased volume and mass. From here every single granule begins a new growth cycle that is the same as the one described above, whilst it also moves towards the discharge wall (helical movement of the "vortex").

In accordance with this embodiment of the invention, the granules produced are polydispersed, in terms of particle size, in a very limited range, with respect to that which has been possible up to now with fluid bed granulation processes according to the prior art.

This is advantageously made possible thanks to the fact, quoted above, that every single granule of substance is subjected to substantially the same growth process, since the operating time of each cycle (wetting, drying, exsiccation and solidification) and the number of cycles to be carried out inside the fluid bed can be controlled, controlling the variations in flow rate of the fluidification air flow in the different zones of said fluid bed.

Moreover, thanks to the granulation process according to the present invention, there is a substantial reduction in the formation of powders, with respect to the processes according to the prior art. This means a reduction, if not even an elimination, of the apparatuses necessary for the recovery of such powders which, together with the possibility of obtaining a finished product of suitable particle size, i.e. directly "sellable", allow the investment and maintenance costs, as well as the energy consumption, of the relative granulation plant to be considerably reduced.

Last but not least, the use of the fluidification air to induce and maintain the aforementioned circulatory vortex movement in the fluid bed of granules in growth, advantageously allows the use of additional external energy sources to achieve the same purpose to be avoided and consequently reflects positively on the efficiency of the process, degreasing consumption.

According to an alternative embodiment (fig. 4) of the present invention, the distribution of the holes 11 in the grid 3 is uniform, but the holes themselves have different diameters. In particular, the diameter of the holes gradually increases as one approaches the wall 5 on which the distributor-supplier 10 is supported; i.e. there are large holes near to the wall 5 and progressively smaller holes as one approaches the wall 4. In this case the variation of fluidification air flow rates is gradual and varies between the zone where it is minimum and that where it is maximum, in the same way as the embodiment of figure 3.

According to a further embodiment, which is not part of the invention, the formation and the maintenance of the circulatory vortex movement of the granules, described above, are obtained not by dividing the fluidification air flow into a plurality of portions of different flow rate, but by suitably varying the entry direction of such a flow into the fluid bed.

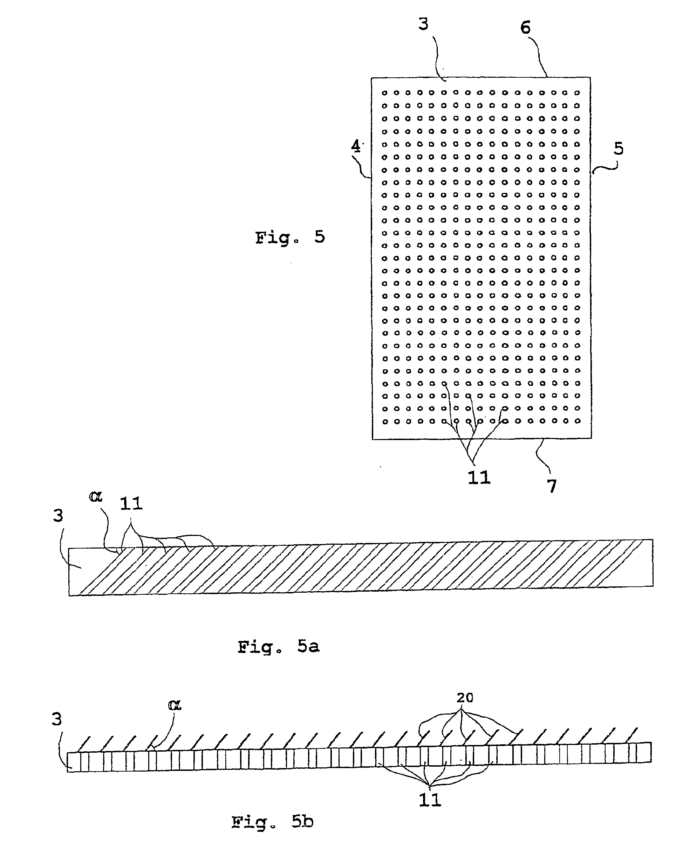

For such a purpose, for example (figures 5, 5a), the holes 11 of the grid 3 are uniformly distributed, they all have the same diameter, and they are all equally inclined on the horizontal by a predetermined angle α, preferably between 30° and 60°, for example 45°.

The inclination of said holes is selected in such a way that the thrust of the air on the granules has a vertical component such as to ensure the support of the fluid bed and a horizontal component that allows the creation and maintenance of the rotary motion of the granules in the fluid bed.

As an alternative to this embodiment, which is also not part of the present invention, the holes 11 of the grid 3 are uniformly distributed, they all have the same diameter and are vertical; the grid 3 is equipped with deflectors 20 (fig. 5b) consisting of metallic foils inclined towards the wall 5 of the container 2 by a predetermined angle α to the horizontal preferably between 30° and 60°, for example 45°, associated with, preferably welded to, said grid 3 at the holes 11 and with a predetermined distance from the holes 11.

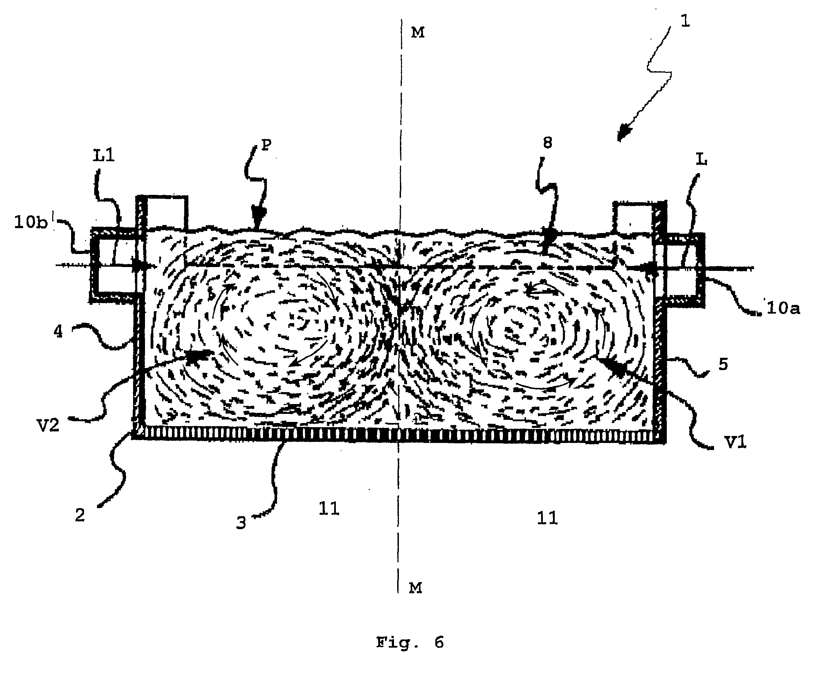

In this way, the fluidification air coming out from the holes 11 is directed, in the same way as the embodiment represented in figure 5a, in such a way as to allow the formation of the aforementioned rotary stream of granules inside the fluid bed. With reference to figure 6, a further advantageous variant embodiment of the granulation process of the present invention provides the formation of two opposite circulatory movements of granules, V1 and V2, in the same fluid bed of the substance to be granulated.

For such a purpose, the container 2 is equipped, on both of the opposite long side walls 4, 5, with respective distributors 10a, 10b for supplying flows L, L1, of the same growth liquid and with a grid 3, with through holes 11, arranged according to symmetrically opposite and equal distributions, with respect to a middle axis M-M. In such a figure 6, the details of the granulator 1 that are structurally and functionally equivalent to those illustrated in the previous figures are indicated with the same reference numerals. In particular, the through holes 11 of the grid 3 are of the type described with reference to figures 3-4.

Thanks to this embodiment it is possible to double the production capacity of the granulator intended to carry out the granulation process according to the invention, keeping the operating conditions of the fluid bed constant.

In accordance with a further variant embodiment of the granulator 1 of the present invention, the seeds S1 and the flow L1, L2 comprising the growth liquid are fed into said fluid bed in correspondence of at least one same side wall 4, 5 of the container 2.

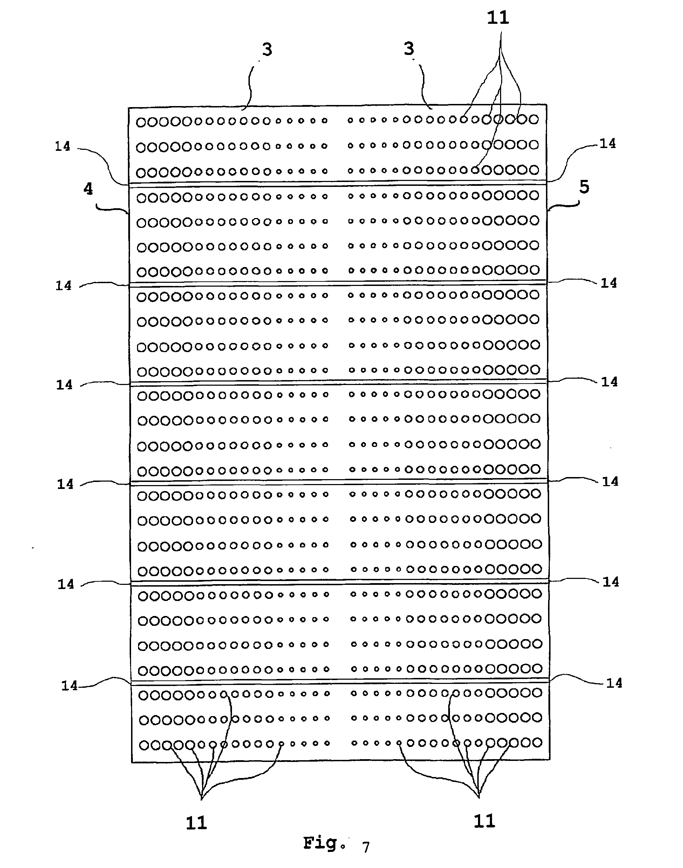

Such a container 2 has a bottom or grid 3 (fig. 7) equipped with holes 11 distributed, in two symmetrically opposite zones, in the same way as the one described with reference to the previous embodiment illustrated in figure 4; said bottom is also equipped with a plurality of slits 14, for discharging granules, of a suitable size and with a width correlated with (greater than) the diameter of the granules intended to be produced. It goes without saying that the present embodiment of the invention can also be used with the other embodiments of the invention, relative to figures 3-3a

The discharge of the finished granules from the bottom 3 of the container 2 occurs by gravity, preferably in countercurrent to a flow A of air or another suitable classification gas fed into said fluid bed through said slits 14. According to this embodiment, the rear wall 7 is, of course, without the opening 8.

The invention thus conceived is susceptible to further variants and modifications all of which are within the scope of protection of the invention itself, as defined by the following claims.

## Claims

1. Fluid bed granulation process of a predetermined substance comprising the steps of:
forming, through a fluidification air flow of predetermined flow rate, a fluid bed of granules of said substance to be granulated, fed to it in form of seeds,
- feeding said fluid bed with a continuous flow of a growth substance,
- inducing the formation of a circulatory movement, substantially vortex-shaped, of the said granules of the substance to be granulated in said fluid bed and through at least part of said fluidification air flow,
maintaining and regulating said circulatory movement through said part of the fluidification air flow,
**characterized in that** said substantially vortex-shaped circulatory movement has substantially horizontal axis and **in that** said fluidification air flow is divided into a plurality of fractions having respective flow rates comprise between a minimum value flow rate, sufficient to support the fluid bed, fed at a first zone thereof and a maximum value flow rate, fed in another zone of the same bed, so as to induce and to maintain said circulatory movement, substantially vortex-shaped, with substantially horizontal axis, of the granules of said substance.

2. Granulation process According to claim 1, **characterized in that** the variation in fluidification air flow rates between said first zone where the flow rate is minimum and the zone spaced out from it where the flow rate is maximum, is of the steps type.

3. Granulation process according to claim 1, **characterized in that** the variation in fluidification air flow rates between said first zone where the flow rate is minimum and the zone where the flow rate is maximum is substantially gradual and continuous.

4. Granulation process according to claim 1, **characterized in that** said granules of the substance to be granulated are made to flow from one end of the fluid bed where a flow of seeds of said substance is continuously fed to an opposite end thereof where a flow of finished granulated product is continuously discharge with substantially helical movement.

5. Granulation process' according to claim 1, **characterized in that** finished granulated product obtained in said fluid bed is continuously discharged from a bottom of said fluid bed by gravity.

6. Fluid bed granulator comprising a substantially parallelepiped container (2), equipped with a perforated bottom (3) comprised between two opposite long side walls (4, 5) and opposite short side walls (6, 7), **characterized in that** said bottom (3) is equipped with holes (11) distributed in said bottom (3) with increasing density or pitch starting from a long, side wall. (4) of the container (2) towards the opposite long side wall (5) of the container itself.

7. Granulator according to claim 6, **characterized in that** said holes (11) all have the same diameter for opening area.

8. Granulator according to claim 7, **characterized in that** in -said bottom or grid (3) parallel bands (3a, 3b, 3c), of predetermined width, are provided, in each of which the respective holes (11) are regularly distributed according to a predetermined "pitch", different from band to band.

9. Fluid bed granulator comprising a substantially parallelepiped container (2), equipped with a perforated bottom (3) comprised between two opposite long side walls (4, 5) and opposite short side walls (6, 7), **characterized in that** said bottom (3) is equipped with holes (11) uniformly distributed in the bottom itself and having a different diameter or opening area, the diameter of each hole (11) gradually increasing as one approaches a long side wall (5) of said container (2), on which a distributor-supplier (10) of granule-growth substance is preferably supported.

10. Fluid bed granulator according to any one of claims 6 to 9 comprising a perforated bottom (3) , **characterized in that** it comprises a plurality of slits (14), of predetermined width, for the release of finished granules from the container (2), and means for feeding a flow (A) of air or another suitable classification gas into said fluid bed through said slits (14).

## Patentansprüche

1. Verfahren zur Wirbelschichtgranulation einer vorbestimmten Substanz, das die Schritte umfasst:
- Ausbildung einer Wirbelschicht von Granulaten der zu granulierenden Substanz durch einen Wirbelluftstrom eines vorbestimmten Durchsatzes, wobei die Substanz in Form von Kristallen nachgespeist wird,
- Nachspeisen der Wirbelschicht mit einem kontinuierlichen Strom einer Wachstumssubstanz,
- Induzieren der Ausbildung einer im Wesentlichen vortexgeformten und durch einen Teil des Wirbelluftstroms geformten Umlaufbewegung der Granulate der zu granulierenden Substanz in der Wirbelschicht,
- Aufrechterhaltung und Regulierung der Umlaufbewegung durch den Anteil des Wirbelluftstroms,
**dadurch gekennzeichnet, dass** die im Wesentlichen vortexgeformte Umlaufbewegung im Wesentlichen eine horizontale Achse aufweist und **dadurch gekennzeichnet, dass** der Wirbelluftstrom in eine Vielzahl von Fraktionen mit einzelnen Durchsätzen aufgeteilt ist, die zwischen einem Mindestwertdurchsatz, der ausreichend ist um die Wirbelschicht zu tragen und um an einem ersten Bereich nachzuspeisen, und einem Maximalwertdurchsatz eingefasst ist, um in einem anderem Bereich derselben Schicht nachzuspeisen, um so die Umlaufbewegung der Granulate der Substanz zu induzieren und aufrechtzuerhalten, die im Wesentlichen vortexgeformt ist und im Wesentlichen eine horizontale Achse aufweist.

2. Verfahren zur Granulation gemäß Anspruch 1, **dadurch gekennzeichnet, dass** die Variation in den Wirbelluftdurchsätzen zwischen dem ersten Bereich, in dem der Durchsatz minimal ist und dem Bereich, der von dem Bereich ausgeschlossen ist, in dem der Durchsatz maximal ist, treppenartig ist.

3. Verfahren zur Granulation gemäß Anspruch 1, **dadurch gekennzeichnet, dass** die Variation in den Wirbelluftdurchsätzen zwischen dem ersten Bereich, in dem der Durchsatz minimal ist und dem Bereich, in dem der Durchsatz maximal ist, im Wesentlichen stufenartig und kontinuierlich ist.

4. Verfahren zur Granulation gemäß Anspruch 1, **dadurch gekennzeichnet, dass** die Granulate der zu granulierenden Substanz so hergestellt werden, dass sie von einem Ende der Wirbelschicht, an dem ein Strom von Kristallen kontinuierlich nachgespeist wird, zu einem gegenilberliegenden Ende davon strömen, an dem ein Strom von fertig granuliertem Produkt mit einer im Wesentlichen helikalen Bewegung konstant abgelassen wird.

5. Verfahren zur Granulation gemäß Anspruch 1, **dadurch gekennzeichnet, dass** das fertig granulierte Produkt, dass in der Wirbelschicht erhalten wird, konstant vom Boden der Wirbelschicht durch Schwerkraft abgelassen wird.

6. Wirbelschichtgranulator, der einen im Wesentlichen parallelgeleiteten Behälter (2) umfasst, der mit einem perforierten Boden (3) ausgestattet ist, der von zwei gegenüberliegenden langen Seitenwänden (4, 5) und gegenüberliegenden kurzen Seitenwänden (6, 7) eingefasst ist und
**dadurch gekennzeichnet, dass** der Boden (3) mit Löchern (11) ausgestattet ist, die in dem Boden (3) mit einer ansteigenden Dichte verteilt sind oder sich beginnend von einer langen Seitenwand (4) in Richtung der gegenüberliegenden Seitenwand (5) des Behälters selbst neigen.

7. Granulator gemäß Anspruch 6, **dadurch gekennzeichnet, dass** die Löcher (11) alle denselben Durchmesser oder dieselbe Anfangsfläche haben.

8. Granulator gemäß Anspruch 7, **dadurch gekennzeichnet, dass** in dem Boden oder dem Gitter (3) parallele Bänder (3a, 3b, 3c) einer vorbestimmten Breite vorgesehen sind, wobei in jedem dieser Bänder die einzelnen Löcher (11) gemäß einem vorbestimmten "Neigungswinkel" regelmäßig angeordnet sind, der sich von Band zu Band unterscheidet.

9. Wirbelschichtgranulator, der einen im Wesentlichen parallelgeleiteten Behälter (2) umfasst, der mit einem perforierten Boden (3) ausgestattet ist, der von zwei gegenüberliegenden langen Seitenwänden (4, 5) und gegenüberliegenden kurzen Seitenwänden (6, 7) eingefasst ist und
**dadurch gekennzeichnet, dass** der Boden (3) mit Löchern (11) ausgestattet ist, die in dem Boden selbst gleichmäßig angeordnet sind und einen unterschiedlichen Durchmesser oder Anfangsfläche haben, wobei sich der Durchmesser eines jeden Loches (11) schrittweise vergrößert bis die lange Seitenwand (5) des Behälters (2) erreicht ist, an der ein Verteiler-Versorger (10) von Granulatwachstumssubstanz vorzugsweise befestigt ist.

10. Wirbelschichtgranulator, der einen perforierten Boden (3) gemäß einem der Ansprüche 6 bis 9 umfasst und **dadurch gekennzeichnet ist, dass** er eine Vielzahl von Schlitzen (14) einer vorbestimmten Breite umfasst, um die fertigen Granulate aus dem Behälter (2) freizusetzen und eine Einrichtung, um einen Strom von Luft (A) oder anderen geeigneten Klassifizierungsgasen in die Wirbelschicht durch die Schlitze (14) nachzuspeisen.

## Revendications

1. Procédé de granulation en lit fluidisé d'une substance prédéterminée, comportant les étapes consistant à :
- former, par un écoulement d'air de fluidification à débit prédéterminé, un lit fluidisé de granules de ladite substance à granuler, acheminées jusqu'à celui-ci sous forme de germes,
- alimenter ledit lit fluidisé par un écoulement continu d'une substance de croissance,
- induire la formation d'un mouvement de circulation, ayant sensiblement une forme de vortex, desdites granules de la substance à granuler dans ledit lit fluidisé et par l'intermédiaire d'au moins une partie dudit écoulement d'air de fluidification,
- maintenir et réguler ledit mouvement de circulation par l'intermédiaire de ladite partie de l'écoulement d'air de fluidification,
**caractérisé en ce que** ledit mouvement de circulation ayant sensiblement une forme de vortex a un axe sensiblement horizontal et **en ce que** ledit écoulement d'air de fluidification est divisé en une pluralité de fractions ayant des débits respectifs compris entre un débit à valeur minimale, suffisant pour supporter le lit fluidisé, créé dans une première zone de celui-ci, et un débit à valeur maximale, introduit dans une autre zone du même lit, de manière à induire et maintenir ledit mouvement de circulation, ayant sensiblement une forme de vortex, avec un axe sensiblement horizontal, des granules de ladite substance.

2. Procédé de granulation selon la revendication 1, **caractérisé en ce que** la variation de débits d'air de fluidification entre ladite première zone où le débit est minimal et la zone espacée de celle-ci où le débit est maximal, est du type à étages.

3. Procédé de granulation selon la revendication 1, **caractérisé en ce que** la variation de débits d'air de fluidification entre ladite première zone où le débit est minimal et la zone où le débit est maximal est sensiblement graduelle et continue.

4. Procédé de granulation selon la revendication 1, **caractérisé en ce que** lesdites granules de la substance à granuler sont amenées à s'écouler depuis une extrémité du lit fluidisé où un écoulement de germes de ladite substance est assuré en continu, jusqu'à une extrémité opposée de celui-ci où un écoulement de produit granulé fini est évacué en continu par un mouvement sensiblement hélicoïdal.

5. Procédé de granulation selon la revendication 1, **caractérisé en ce que** du produit granulé fini obtenu dans ledit lit fluidisé est évacué en continu par gravité à partir d'un fond dudit lit fluidisé.

6. Granulateur en lit fluidisé comportant un conteneur sensiblement parallélépipédique (2), équipé d'un fond perforé (3) compris entre deux longues parois latérales opposées (4, 5) et deux courtes parois latérales opposées (6, 7), **caractérisé en ce que** ledit fond (3) est équipé de trous (11) répartis dans ledit fond (3) avec une densité ou un pas croissant débutant à partir d'une paroi latérale longue (4) du conteneur (2) vers la paroi latérale longue opposée (5) du conteneur lui-même.

7. Granulateur selon la revendication 6, **caractérisé en ce que** lesdits trous (11) ont tous le même diamètre ou la même aire d'ouverture.

8. Granulateur selon la revendication 7, **caractérisé en ce que** dans ledit fond ou ladite grille (3) sont agencées des bandes parallèles (3a, 3b, 3c) de largeur prédéterminée, des trous respectifs (11) étant régulièrement répartis dans chacune d'entre elles selon un "pas" prédéterminé, différent d'une bande à l'autre.

9. Granulateur en lit fluidisé comportant un conteneur sensiblement parallélépipédique (2), équipé d'un fond perforé (3) compris entre deux longues parois latérales opposées (4, 5) et deux courtes parois latérales opposées (6, 7), **caractérisé en ce que** ledit fond (3) est équipé de trous (11) uniformément répartis dans le fond lui-même et ayant un diamètre différent ou une aire d'ouverture différente, le diamètre de chaque trou (11) augmentant graduellement lorsque l'on s'approche d'une paroi latérale longue (5) dudit conteneur (2), sur laquelle un dispositif de distribution-alimentation (10) de la substance de croissance des granules est de préférence en appui.

10. Granulateur en lit fluidisé selon l'une quelconque des revendications 6 à 9 comportant un fond perforé (3), **caractérisé en ce qu'**il comporte une pluralité de fentes (14), de largeur prédéterminée, pour l'évacuation des granules finies à partir du conteneur (2), et des moyens pour créer un écoulement (A) d'air ou d'un autre gaz de classification adaptée dans ledit lit fluidisé à travers lesdites fentes (14).
